# EUROPEAN PATENT APPLICATION

(11) **EP 1 482 736 A2**
(43) Date of publication of application: **01.12.2004**
(21) Application number: 04010854.0
(22) Date of filing: 06.05.2004
(51) Int. Cl.: H04N 7/173, H04N 7/24, H04N 7/15

(54) **Method and system for media playback architecture**

(30) Priority: 16.05.2003 US 439967
(71) Applicant: SEIKO EPSON CORPORATION, Tokyo 163 (JP)
(72) Inventor: Li, Chia-Hsin, San Jose California 95129 (JP); Ivashin, Victor, Danville California 94506 (US); Nelson, Steve, San Jose California 95139 (JP)
(74) Representative: Grünecker, Kinkeldey, Stockmair & Schwanhäusser Anwaltssozietät

(57) **Abstract**

A system configured to playback videoconference data is provided. The system includes a media management server configured to receive videoconference data associated with a videoconference session. The media management server is configured to convert the videoconference data to a common format for storage. An event database configured to capture events occurring during the videoconference session is included. A media analysis server configured to analyze the stored videoconference data to insert indices representing the captured events is provided. A media playback unit configured to establish a connection with the media management server is included. The media playback unit is further configured to enable position control of a video stream delivered to the media playback unit from the media management server while maintaining the connection. A method, a computer readable medium, and a graphical user interface for the play back of videoconference data are also provided.

## Description

### CROSS REFERENCE TO RELATED APPLICATIONS

This application is related to U.S. Patent Application No. (Attorney Docket No. AP167HO), filed on the same day as the instant application and entitled "Annotation Management System." This application is also related to U.S. Patent Application No. 10/192,080 filed on July 10, 2002 and entitled "Multi-Participant Conference System with Controllable Content Delivery Using a Client Monitor Back-Channel." Both of these related applications are hereby incorporated by reference for all purposes.

### BACKGROUND OF THE INVENTION

### 1. Field of the Invention

This invention relates generally to video conferencing systems and more particularly to a play back engine configured to provide the play back of stored videoconference data.

### 2. Description of the Related Art

Conferencing devices are used to facilitate communication between two or more participants physically located at separate locations. Devices are available to exchange live video, audio, and other data to view, hear, or otherwise collaborate with each participant. Common applications for conferencing include meetings/workgroups, presentations, and training/education. Today, with the help of videoconferencing software, a personal computer with an inexpensive camera and microphone can be used to connect with other conferencing participants. The operating systems of some of these machines provide simple peer-to-peer videoconferencing software, such as MICROSOFT'S NETMEETING application that is included with MICROSOFT WINDOWS based operating systems. Alternatively, peer-to-peer videoconferencing software application can be inexpensively purchased separately. Motivated by the availability of software and inexpensive camera/microphone devices, videoconferencing has become increasingly popular.

A shortcoming associated with video conferencing units is the ability for play back of the videoconference for a user unable to attend or participate in the videoconference. That is, the play back of the videoconference meeting is not even an option in most instances. Furthermore, where the videoconference is stored, the user is severely restricted in the play back options. For example, the user may not be able to play back certain portions of the videoconference meeting. In addition, current configurations for the play back of streaming video continually close and re-open connections when discontinuous segments of the video stream are displayed.

As a result, there is a need to solve the problems of the prior art to provide a method and system for enabling the storage and play back of a videoconference meeting. In addition, the play back engine should be configured to enable a user to customize the presentation in terms of the display and the segments of the stored videoconference data that is being presented.

### SUMMARY OF THE INVENTION

Broadly speaking, the present invention fills these needs by providing a method and system for a playback engine for customized presentation of stored videoconference data. It should be appreciated that the present invention can be implemented in numerous ways, including as a method, a system, a computer readable medium or a graphical user interface. Several inventive embodiments of the present invention are described below.

In one embodiment, a system configured to playback videoconference data is provided. The system includes a media management server configured to receive videoconference data associated with a videoconference session. The media management server is configured to convert the videoconference data to a common format for storage on a storage media. An event database configured to capture events occurring during the videoconference session is included. A media analysis server configured to analyze the stored videoconference data to insert indices representing the captured events of the event database is provided. A media playback unit configured to establish a connection with the media management server is included. The media playback unit is further configured to enable position control of a video stream delivered to the media playback unit from the media management server while maintaining the connection.

In another embodiment, a videoconferencing system is provided. The videoconference system includes a server component. The server component includes a media server configured to store both video/audio data and events associated with a videoconference session. The media server is capable of analyzing the stored video/audio data to insert markers into the stored video/audio data. The markers identify the events. A client component is provided. The client component includes a client in communication with a client monitor. The client component includes a media playback unit configured to establish a connection with the media server. The media playback unit is further configured to enable position control of a video stream defined from the stored video/audio data delivered to the media playback unit from the media server while maintaining the connection. A first and second path defined between the client component and the server component are included. The first path enables real time video/audio data to be exchanged between the client component and a conferencing endpoint of the server component during a videoconference. The second path defined between the client component and the server component enables system information to be exchanged between the client monitor and the server component.

In yet another embodiment, a graphical user interface (GUI) for playback of videoconference data rendered on a display screen is provided. The GUI includes a first region defining an integrated audio/video component corresponding to a time position of a video stream associated with the videoconference data. The integrated audio/video component is associated with a media server. A.second region providing a document file corresponding to the time position of the video stream is included. A third region providing a media presentation corresponding to the time position of the video stream is included. A fourth region providing a list of content items associated with the video stream is included. A selection of one of the content items of the fourth region triggers the first, second and third region to present respective videoconference data corresponding to a time position associated with the selected content item.

In still yet another embodiment, a method for presenting stored videoconference data is provided. The method initiates with converting media formats associated with a videoconference presentation to a common format videoconference data. Then, the common format videoconference data is stored. Next, events associated with the stored videoconference data are identified. Then, markers representing the events are inserted into the stored videoconference data. Next, segments of the stored videoconference data corresponding to the markers are presented.

In another embodiment, a computer readable medium having program instructions for presenting stored videoconference data is provided. The computer readable medium includes program instructions for converting media formats associated with a videoconference presentation to a common format videoconference data. Program instructions for storing the common format videoconference data are included. Program instructions for identifying events associated with the stored videoconference data are provided. Program instructions for inserting markers representing the events into the stored videoconference data and program instructions for presenting segments of the stored videoconference data corresponding to the markers are included.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, and like reference numerals designate like structural elements.

Figure 1 is a schematic diagram of the components for an exemplary multi-participant conference system using a client monitor back-channel in accordance with one embodiment of the invention.

Figure 2 is a simplified schematic diagram illustrating the relationship between modules configured for the presentation and playback of media for a playback engine in accordance with one embodiment of the invention.

Figure 3 is a simplified schematic diagram of the modules associated with the client and server components for a media playback module in accordance with one embodiment of the invention.

Figure 4 is a simplified schematic diagram illustrating the conversion of videoconference data files to a common file format in accordance with one embodiment of the invention.

Figure 5 is a simplified schematic diagram pictorially illustrating the building of an event database in accordance with one embodiment of the invention.

Figure 6 is a simplified schematic diagram illustrating the association of indices into a video clip in accordance with one embodiment of the invention.

Figure 7 is an exemplary illustration of a graphical user interface (GUI) for playback of videoconference data rendered on a display screen in accordance with one embodiment of the invention.

Figure 8 is a flow chart diagram illustrating the method operations for presenting stored videoconference data in accordance with one embodiment of the invention.

### DETAILED DESCRIPTION OF THE PREFERRED EMBODIMENTS

An invention is described for an apparatus and method directed toward a videoconferencing system where the videoconference and associated data are recorded, thereby enabling a user to view the meeting at a later date according to a presentation scheme defined by the user. It will be apparent, however, to one skilled in the art in light of this disclosure, that the present invention may be practiced without some or all of these specific details. In other instances, well known process operations have not been described in detail in order not to unnecessarily obscure the present invention. The term "about" as used herein refers to +/- 10% of the referenced value.

The embodiments of the present invention provide a method and system providing for the presentation and playback of media recorded during a videoconference meeting. As used herein media includes any suitable type of information or data encountered during a videoconference meeting, e.g., POWERPOINT presentation images, video/audio clips, raster/vector images, annotations, documents, etc. The embodiments described herein may be included with the videoconference system described in U.S. Patent Application No. 10/192,080 referenced above. It should be appreciated that the system architecture described herein may be configured to interface with any suitable videoconference system to provide media playback. The architecture of the media playback system includes a block for rendering media on a display screen and a block for controlling how the media is being played back. Accordingly, the need to reopen a connection for every position change of the media being played back is eliminated as the playback controller is in communication with the server delivering the video stream.

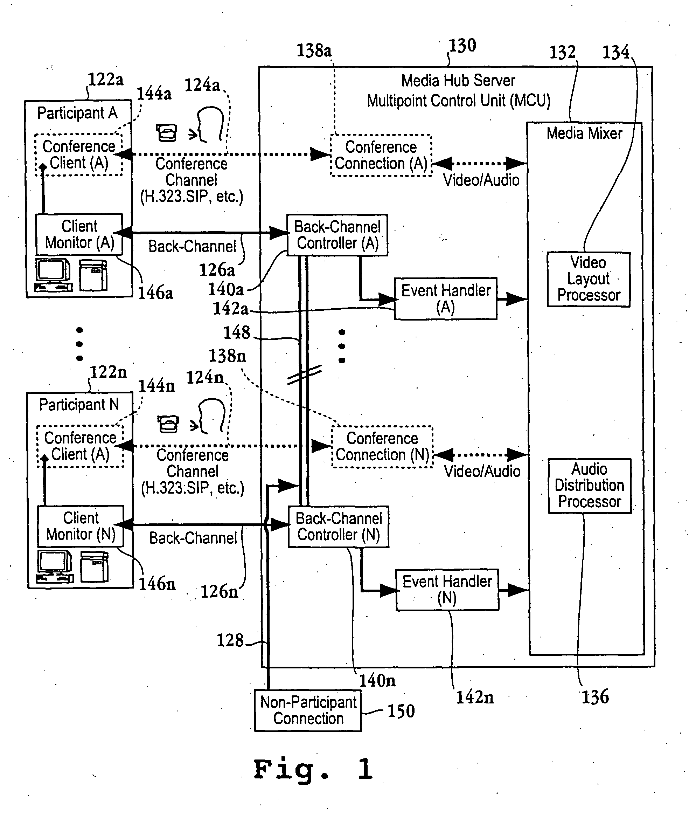

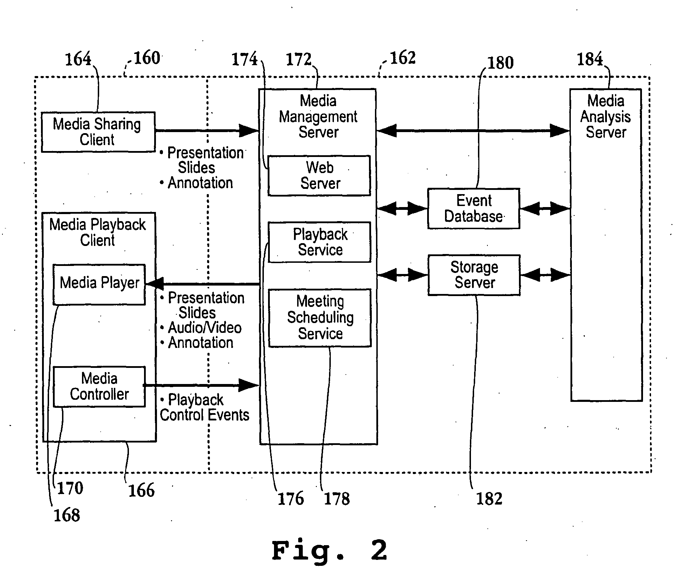

Figure 1 is a schematic diagram of the components for an exemplary multiparticipant conference system using a client monitor back-channel in accordance with one embodiment of the invention. The media playback architecture described with reference to Figures 2-8 may be used to provide media playback of the system described in Figure 1. Thus, the system of Figure 1 represents a real time system, whereas the media playback system of Figures 2-8 represents the content storage/playback component used in conjunction with the real time system. The client component includes multiple participants, such as participant A 122a through participant N 122n. Each participant 122 includes conference client 144 and client monitor 146. For example, participant A 122a includes conference client A 144a and client monitor A 146a. In one embodiment, conference client A 144a includes the participant's peer-to-peer videoconferencing software. The role of conference client A is to place calls to another participant, establish and disconnect a conferencing session, capture and send content, receive and playback the content exchanged, etc. It should be appreciated that calls from conference client A 144a route through media hub server 130. Other participants similarly use their associated conference client to place calls to media hub server 130 to join the conference. In one embodiment, conference client A 144a includes a high-level user-interface for the conference, such as when the conference client is a pre-existing software application. For example, a product that provides peer-to-peer videoconferencing is the NETMEETING application software from MICROSOFT Corporation. It should be appreciated that media hub server 130 may also be referred to as a media transport server.

Client monitor (CM) 146 is monitoring conference client 144. CM 146a is configured to monitor conference client A 144a. That is, CM 146a looks at how a user is interacting with the software application by monitoring a video display window of client A 144a in one embodiment. In addition, CM 146a interprets the users interactions in order to transmit the interactions to the server component. In one embodiment, CM 146 is configured to provide four functions. One function monitors the start/stop of a conference channel so that a back-channel communication session can be established in parallel to a conference channel session between the participant and the server component. A second function monitors events, such as user interactions and mouse messages, within the video window displayed by conference client 144. A third function handles control message information between the CM 146 and a back-channel controller 140 of the server component. A fourth function provides an external user-interface for the participant that can be used to display and send images to other conference members, show the other connected participants names, and other suitable communication information or tools.

As mentioned above, client monitor 146 watches for activity in conference client 144. In one embodiment, this includes monitoring user events over the video display region containing the conference content, and also includes the conference session control information. For example, CM 146 watches for the start and end of a conference session or a call from the conference client. When conference client 144 places a call to media hub server 130 to start a new conference session, CM 146 also places a call to the media hub server. The call from CM 146 establishes back-channel connection 126 for the participant's conference session. Since CM 146 can monitor the session start/stop events, back-channel connection 126 initiates automatically without additional user setup, i.e., the back-channel connection is transparent to a user. Accordingly, a new session is maintained in parallel with conference client 144 activity. It should be appreciated that conference channel 124 provides a video/audio connection between conference client 144 and conference connection 138 of media hub server 130. In one embodiment, conference channel 124 provides a communication link for real time video/audio data of the conference session communicated between the client component and the server component.

In one embodiment, CM 146 specifically monitors activity that occurs over the conference's video frame displayed by conference client 144. For example, CM 146 may monitor the video image in MICROSOFT'S NETMEETING application. Mouse activity in the client frame is relayed via protocol across back-channel connection 126 to media hub server 130. In turn, back-channel controller 140 can report this activity to another participant, or event handler 142 for the respective participant. In this embodiment, the monitoring of conference client 144 application occurs through a hook between the operating system level and the application level. As mentioned above, the video window can be watched for mouse clicks or keyboard strokes from outside of the videoconferencing application.

In another embodiment, CM 146 can present a separate user-interface to the participant. This interface can be shown in parallel to the user interface presented by conference client 144 and may remain throughout the established conference. Alternatively, the user interface presented by CM 146 may appear before or after a conference session for other configuration or setup purposes.

In yet another embodiment, CM 146 may provide an interface for direct connection to a communication session hosted by media hub server 130 without need for a conference client. In this embodiment, CM 146 presents a user interface that allows back-channel connection 126 to be utilized to return meeting summary content, current meeting status, participant information, shared data content, or even live conference audio. This might occur, for instance, if the participant has chosen not to use conference client 144 because the participant only wishes to monitor the activities of the communication. It should be appreciated that the client component can be referred to as a thin client in that conference client 144 performs minimal data processing. For example, any suitable videoconference application may be included as conference client 144. As previously mentioned, CM 146a is configured to recognize when the videoconference application of conference client A 144a starts and stops running, in turn, the CM can start and stop running as the conference client does. CM 146a can also receive information from the server component in parallel to the videoconference session. For example, CM 146a may allow participant A 122a to share an image during the conference session. Accordingly, the shared image may be provided to each of the client monitors so that each participant is enabled to view the image over a document viewer rather than through the video, display region of the videoconference software. As a result, the participants can view a much clearer image of the shared document. In one embodiment, a document shared in a conference is available for viewing by each of the clients.

The server component includes media hub server 130, which provides a multipoint control unit (MCU) that is configured to deliver participant customizable information. It should be appreciated that media hub server 130 and the components of the media hub server include software code configured to execute functionality as described herein. In one embodiment, media hub server 130 is a component of a hardware based server implementing the embodiments described herein. Media hub server 130 includes media mixer 132, back-channel controller 140, and event handler 142. Media hub server 130 also provides conference connection 138. More specifically, conference connection A 138a completes the link allowing the peer-to-peer videoconferencing software of conference client A 144a to communicate with media hub server 130. That is, conferencing endpoint 138a emulates another peer and performs a handshake with conference client A 144a, which is expecting a peer-to-peer connection.

In one embodiment, media hub server 130 provides Multipoint Control Unit (MCU) functionality by allowing connections of separate participants into selectable logical rooms for shared conference communications. As an MCU, media hub server 130 acts as a "peer" to a conference client, but can also receive calls from multiple participants. One skilled in the art will appreciate that media hub server 130 internally links all the participants of the same logical room, defining a multi-participant conference session for each room, each peer-to-peer conference client operating with the media hub only as a peer. As mentioned above, media hub server 130 is configured to conform to the peer requirements of conference client 144. For example, if the conference clients are using H.323 compliant conference protocols, as found in applications like MICROSOFT'S NETMEETING, media hub server 130 must also support the H.323 protocol. Said another way, the conference communication can occur via H.323 protocols, Session Initiated Protocols (SIP), or other suitable APIs that match the participant connection requirements.

Still referring to Figure 1, media mixer 132 is configured to assemble audio and video information specific to each participant from the combination of all participants' audio and video, the specific participant configuration information, and server user-interface settings. Media mixer 132 performs multiplexing work by combining incoming data streams, i.e., audio/video streams, on a per participant basis. Video layout processor 134 and audio distribution processor 136 assemble the conference signals and are explained in more detail below. Client monitor-back-channel network allows media hub server 130 to monitor a user's interactions with conference client 144 and to provide the appearance that the peer-to-peer software application has additional functionality. The additional functionality adapts the peer-to-peer functionality of the software application, executed by conference client 144, for the multi-participant environment described herein. The client monitor-back-channel network includes client monitor 146 back-channel connection 126, back-channel controller 140, and event handler 142.

Back-channel connection 126 is analogous to a parallel conference in addition to conference channel 124. Back-channel controller (BCC) 140 maintains the communication link from each client monitor. Protocols defined on the link are interpreted at media hub server 130 and passed to the appropriate destinations, i.e., other participant's back-channel controllers, event handler 142, or back to the CM 146. Each of the back-channel controllers 140 are in communication through back-channel controller communication link 148.

In one embodiment, media hub server 130 provides a client configurable video stream containing a scaled version of each of the conference participants. A participant's event handler 142 in media hub server 130 is responsible for maintaining state information for each participant and passing this information to media mixer 132 for construction of that participants user-interface. In another embodiment, a server-side user-interface may also be embedded into the participant's video/audio streams.

Continuing with Figure 1, a non-participant may join the conference in accordance with one embodiment of the invention. Here, non participant connection 150 is in communication with back-channel communication link 148. Back-channel connection 128 may be established between non-participant client 150 and back-channel controllers 140 of media hub server 130. In one embodiment, back channel communication link 148 enables each of the back channel controllers to communicate among themselves, thereby enabling corresponding client monitors or non-participants to communicate via respective back channel connections 126. Accordingly, images and files can be shared among clients over back channel communication link 148 and back channel connections 126. In addition, a non-participant back-channel connection can be used to gain access to media hub server 130 for query of server status, conference activity, attending participants, connection information, etc., in one embodiment. Thus, the non-participant back-channel connection acts as a back door to the server or a conference session. From the server, the non-participant can obtain information for an administrator panel that displays conference and server performance, status, etc. From the conference session, the non-participant can obtain limited conference content across back channel communication link 148, such as conference audio, text, images or other pertinent information to an active conference session. It should be appreciated that Figure 1 represents an exemplary videoconference system which may provide a playback engine described below. Accordingly, Figure 1 is not meant to be limiting as the features described herein may be included with any suitable videoconference system.

Figure 2 is a simplified schematic diagram illustrating the relationship between modules configured for the presentation and playback of media for a playback engine in accordance with one embodiment of the invention. It should be appreciated that the overall system architecture design of Figure 2 may be incorporated with any suitable videoconferencing system, e.g., the videoconferencing system depicted with reference to Figure 1. The media playback architecture of Figure 2 includes client components 160 and server components 162. Client component 160 includes media sharing client module 164 and media playback module 166. Media playback module 166 includes media player module 168 and media controller module 170. As will be explained in more detail below, the separation of media player module 168 and media controller module 170 enables a more efficient flexible playback method for stored videoconference data. Media sharing client module 164 may be a client that may upload the media to server component in binary form. For example, during the meeting, the participants may need to share or exchange medias, such as POWERPOINT presentations, annotations, images, etc. Media sharing client module 164 is an application that allows the participant to send the media being shared or exchanged to media management server 172. In the application associated with media sharing client module 164, the raw binary data of the media will be uploaded to media management server 172. Then, the binary data will be processed and converted to some common media format if the format of the media is able to be parsed, e.g., as POWERPOINT files. One skilled in the art will appreciate that client components 160 may be included within the client components for each of the participants with reference to Figure 1. Here, the client component of Figure 1 sends events to media management server 172 separate from events sent to media hub server 130 of Figure 1.

Server component 162 of Figure 2 includes media management server 172. Media management server 172 includes web server module 174, playback service module 176 and meeting scheduling service module 178. Also included in server component 162 is meeting analysis server 184, event database module 180 and storage server 182. As mentioned above, media sharing client module 164 is an application that allows a videoconference participant to send media being shared or exchanged to media management server 172. It should be appreciated that the term "media" as used herein, may include POWERPOINT presentations, video/audio clips, Raster/Vector images, annotations, document files and any other suitable media used during a videoconference. It should be further appreciated that media management server 172 may be in communication with any number of media sharing clients 164. Media management server 172 manages and organizes the meeting, i.e., manages and organizes videoconference data for distribution among the participants of the meeting. Media management server 172 builds the database to manage the medias and allow the meeting participants to retrieve the media data from storage server 182.

Web server module 174 enables the downloading of any software code needed for participating or viewing the videoconference session. Meeting scheduling service module 178 enables a user to set up or join a videoconference session. That is, a user that desires to set up or join a videoconference session may do so through a web browser that may download hyper text markup language (HTML) type pages provided through web server module 174. Once the user has joined the videoconference session, software code may be downloaded from web server 174, e.g., software code related to client functionality after which the client begins communicating with media transport server 130. It should be appreciated that through meeting scheduling service module 178, media management server 172 connects to the appropriate media transport server to enable the videoconference session. In another embodiment, since the videoconference session is stored, upon completion of the videoconference session a meeting summary may be created. The meeting summary may be accessed through web server 174. The meeting summary is an overview of the meeting that may be presented to a user so that the user may better decide whether to view the meeting or what portions of the meeting to view. It will be apparent to one skilled in the art that the meeting summary may be presented in any number of suitable manners. Furthermore, the stored videoconference data may be summarized by the meeting summary to enable a user to more accurately decide which portion of the meeting summary to select. In one embodiment, playback service module 176 provides the functionality for a conference client to communicate events that occur during a videoconference session or playback data from a previously recorded videoconference session.

Media management server 172 is in communication with media analysis server 184. Media management server 172 also retrieves the information from media analysis server 184 and associated modules for media playback and presentation. Media analysis server 184 is in communication with event data base 180 and storage server 182. Media analysis server 184 performs the post-processing of the media recorded during the meeting and analyzes the media to build the meaningful and useful information to be used for media presentation and playback in one embodiment. Media analysis server 184 will also add and retrieve information to event database 180 to store the information for the media presentation and playback. In one embodiment, the meaningful and useful information includes the insertion of indices and markers into the stored videoconference data. In another embodiment, the meaningful and useful information includes the data stored in event data base 180 as discussed below.

Storage server 182 of Figure 2 is configured to store media associated with the videoconference. Storage server 182 is responsible for storing the medias described in the above section. In one embodiment, storage server 182 contains storage devices, such as hard drives, magnetic tapes, and DVD-Rom, etc. Access to the stored media may be provided through a set of application programming interfaces (APIs) defined for accessing the medias that may be retrieved from the storage server by other components in the system. In one embodiment, storage server 182 accepts network connections for users or participants of the videoconference to upload their medias. Exemplary mechanisms for uploading the medias to the storage server include: Simple transport control protocol/Intemet protocol (TCP/IP) socket connection, hypertext transport protocol (HTTP) file upload protocol, simple object oriented access protocol (SOAP/XML), and other suitable network transport protocols. Event database 180 of Figure 2 stores events recorded during the videoconference duration. Examples of an event, as used herein, include the following: the meeting start, the meeting end, the next page of a media presentation, such as a POWERPOINT presentation, a participant uploaded a document, a participant enters or exits the meeting, each time a particular participant speaks, and other suitable participant activities. It should be appreciated that the terms "meeting" and "videoconference" are interchangeable as used herein. In traditional solutions, the media, such as a POWERPOINT presentation, a video clip, is usually played within a single application, i.e., combined media player and controller. However, the combined module requires the users to install different applications for different methods of media playback. Accordingly, disadvantages, e.g., such as different media playback methods requiring different programs to render, and recording events associated with different medias needing proprietary programs, may result from the combined media player and controller.

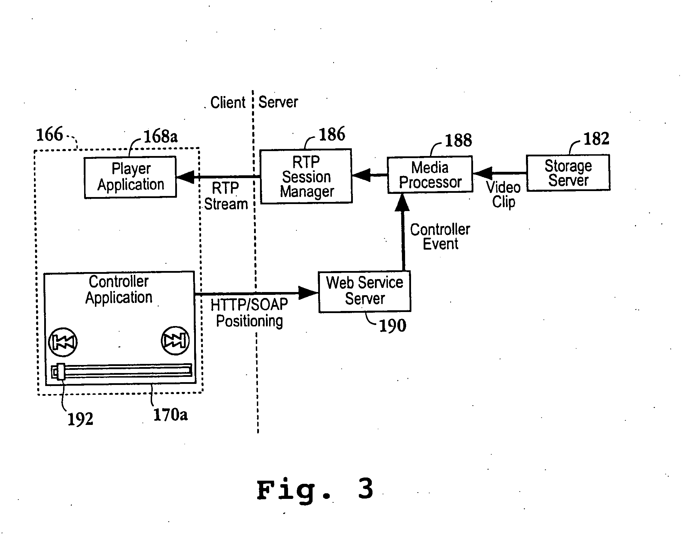

Figure 3 is a simplified schematic diagram of the modules associated with the client and server components for a media playback module in accordance with one embodiment of the invention. Media playback module 166 includes player application 168a and controller application 170a. Media playback module 166 is configured to request the media management server of Figure 2 to view specified segments of the videoconference based on events. As mentioned above, player application module 168a and controller application module 170a are separate applications of respective media player module 168 and media controller module 170, thereby allowing the controller application module to specify a position of stored videoconference content to be viewed through player application module 168a without requiring a new connection. Here, web service server module 190 receives the positioning request from controller application 170a and then transmits a controller event signal to media processor module 188 to change the location of the media being played back. In one embodiment, media processor module 188 is a code segment for internally decoding video and preparing the decoded video for network transmission. As mentioned above, storage server 182 stores the videoconference data which is accessed by media processor module 188. The data from media processor module 188 is transmitted through real time protocol (RTP) session manager module 186 to player application module 168a for presentation. It should be appreciated that a user may move slider button 192, which may be provided through a graphical user interface (GUI), in order to change the position of the videoconference data that is being presented through player application module 168a. However, as the position of the videoconference data is changed through the movement of slider button 192, it is not necessary to define a new connection in order to present the videoconference data through player application module 168a. That is, position control of a live video stream is enabled while maintaining a connection with player application module 168a. Here, player application module 168a is unaware of the position change as the feed from the media management server is advanced through controller application 170a.

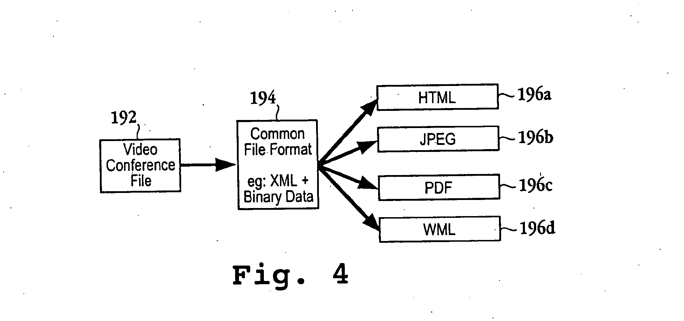

Figure 4 is a simplified schematic diagram illustrating the conversion of videoconference data files to a common file format in accordance with one embodiment of the invention. Here, videoconference file 192 is converted to a common file format 194. In one embodiment, the common file format is a format associated with extensible mark-up language (XML). It will be apparent to one skilled in the art that XML format enables the sharing of both the format and the binary data on a distributed network. The conversion to a common file format enables the communication through various file formats, e.g., hypertext mark-up language (HTML), joint photographic expert group format (JPEG), portable document format (PDF), and wireless mark-up language (WML). Videoconference file 192, is a slide presentation, e.g., POWERPOINT presentation in one embodiment.

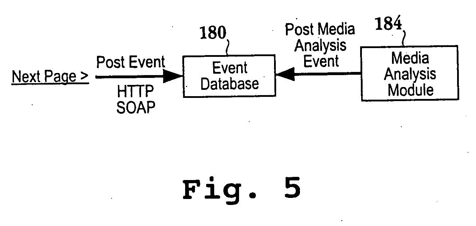

Figure 5 is a simplified schematic diagram pictorially illustrating the building of an event database in accordance with one embodiment of the invention. Here, a change to a next page of a slide presentation may trigger a recordable event that is stored in event data base 180. Additionally, media analysis module 184 may process the stored video content and generate events that are stored in event data base 180.

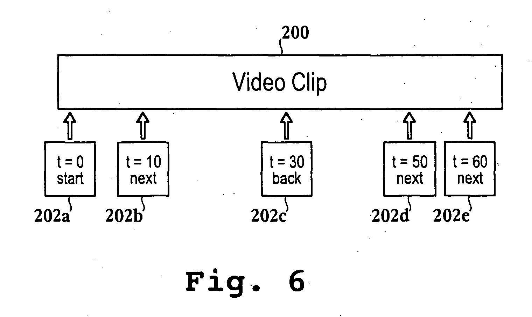

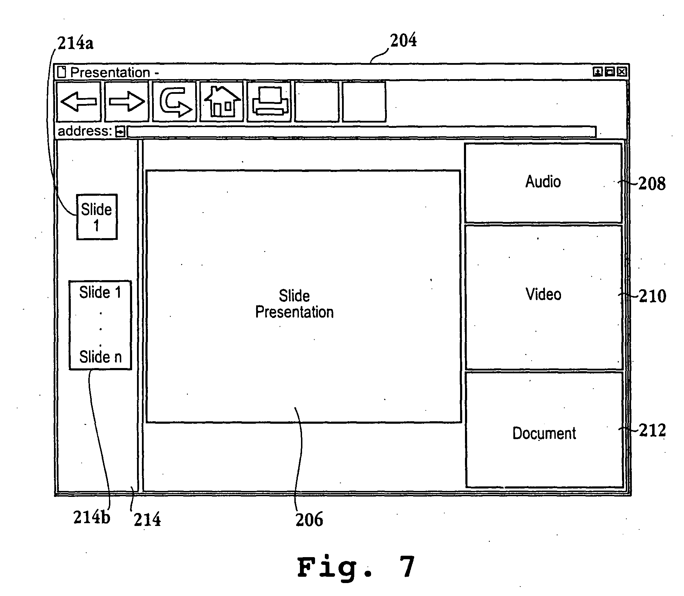

Figure 6 is a simplified schematic diagram illustrating the association of indices into a video clip in accordance with one embodiment of the invention. Video clip 200 may be one segment of the stored videoconference data. Here, at certain times, events occur within video clip 200. For example, at time point t=0 202a represents the start of the video clip 200. At time point t=10 202b an event occurs. For example, a next slide, presentation or media may be presented within video clip 200. At time point t=30 202c another event occurs. For example, a previous slide, presentation or media may be re-illustrated within video clip 200. Similarly, for time points t=50 202d and t=60 202e successive events occur within video clip 200. In one embodiment, at each of the time points t=0 through t=60, 202a through 202e, a marker or index is inserted into video clip 200. The indexed video clip 200 may then be stored. Additionally, the markers or indices, i.e., their corresponding locations within the video clip, are stored in the event data base. It should be appreciated that the media analysis server of Figure 2 finds locations in the video clip to insert the markers. For example, the media analysis server may search for a key word and cause insertion of events into the event database corresponding to the occurrence of the key word in the video clip. Thereafter, the media playback player can query the media management server to generate markers in order for the media player to jump to appropriate video clips or segments of a video clip during playback. Thus, a user may view the conference based upon the defined markers or any other desired configuration. In one embodiment, the user defines how to configure the play back of the media through a graphical user interface (GUI) as described with reference to Figure 7. Furthermore, as used herein, markers and indices are interchangeable.

Figure 7 is an exemplary illustration of a graphical user interface (GUI) for playback of videoconference data rendered on a display screen in accordance with one embodiment of the invention. GUI 204 includes region 206 where a slide presentation may occur. Also included are regions 208, 210 and 212 where audio, video and document data is displayed, respectively. Region 214 provides a region where a list of content items associated with the video stream are illustrated. In one embodiment, region 214 may include thumbnails 214a where a mini version of region 206 is included. Alternatively, region 214 may be a list of slides which a user may be able to click on in order to present that slide. Thus, the selection of a content item in region 214 triggers the display of corresponding media, audio, video, and document data in regions 206, 208, 210, and 212, respectively. It should be appreciated that the markers enable the location of the corresponding information to the content item selection. Moreover, the decoupling of the media player form the media controller as described herein, avoids the opening and closing of the connection when moving to different positions within the stored videoconference data. That is, the feed of the video data from the media management server is advanced to the appropriate location without having to close a current channel and open a new channel for the next segment, of the video stream to be displayed.

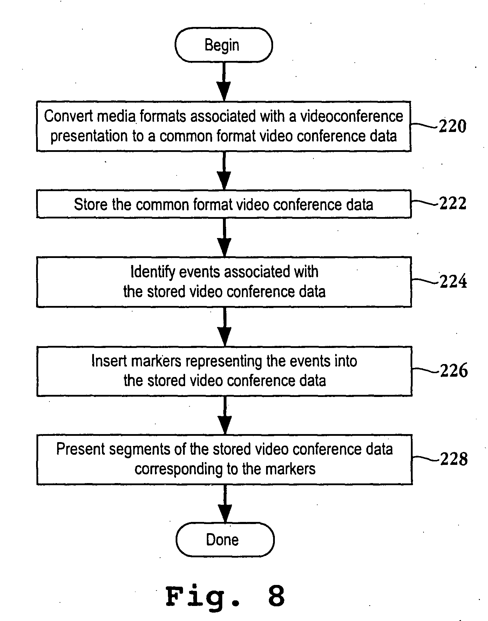

Figure 8 is a flow chart diagram illustrating the method operations for presenting stored videoconference data in accordance with one embodiment of the invention. The method initiates with operation 220 where a media format associated with a videoconference presentation is converted to a common format videoconference data. Here, the data may be converted to a common format as described with reference to Figure 4. In one embodiment, the raw binary data associated with the media is uploaded to the media management server through the media sharing client application. The uploaded binary data is then processed and converted to a common media format. The method then advances to operation 222 where the common format videoconference data is stored. The common format videoconference data may be stored on a storage server such as the storage server illustrated in Figures 2 and 3. The method then advances to operation 224 where events associated with the stored videoconference data are identified. The method then moves to operation 226 where markers representing the events are inserted into the stored videoconference data. For example, the markers or indices may be inserted into a video clip to correspond to the starting positions of events within the video clip as described with reference to Figure 6. It should be appreciated that the markers enable the media management server to select desired segments of the stored videoconference data for presentation.

The method of Figure 8 then advances to operation 228 where segments of the stored videoconference data corresponding to the markers are presented. Here, the media playback unit is configured to enable presentation of the segments being presented without having to close and re-open connection in between the presentation of the segments. That is, if a user should decide to present every point of the videoconference data where a certain participant speaks, a new connection will not have to be established in order to advance to each segment corresponding to the speaking participant. Thus, the constant re-establishing and re-buffering of a signal is eliminated.

In summary, the above described invention provides a playback engine for a videoconference system. The playback engine decouples the media controller and the media player to avoid connection changes associated with discontinuous video segments being presented. Binary data of the videoconference is stored in a storage server and a media management server retrieves information from the storage server as well as a media analysis server for eventual play back for a user. The user may customize the play back of the stored videoconference data according to the user's preferences which are communicated to the media management server.

With the above embodiments in mind, it should be understood that the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

The invention can also be embodied as computer readable code on a computer readable medium. The computer readable medium is any data storage device that can store data which can be thereafter read by a computer system. The computer readable medium also includes an electromagnetic carrier wave in which the computer code is embodied. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

## Claims

1. A system configured to playback videoconference data, comprising:
a media management server configured to receive videoconference data associated with a videoconference session, the media management server configured to convert the videoconference data to a common format for storage on a storage media;
an event database configured to capture events occurring during the videoconference session;
a media analysis server configured to analyze the stored videoconference data to insert indices representing the captured events of the event database; and
a media playback unit configured to establish a connection with the media management server, the media playback unit further configured to enable position control of a video stream delivered to the media playback unit from the media management server while maintaining the connection.

2. The system of claim 1, further comprising:
a storage server including the storage media, the storage server configured to provide application programming interfaces (APIs) enabling retrieval of stored videoconference data.

3. The system of claim 1, wherein the media management server includes a web server, a playback service module and a meeting scheduling service module.

4. The system of claim 1, wherein the videoconference data includes media selected from the group consisting of POWERPOINT presentations, video/audio clips, raster/vector images, annotations and document files.

5. The system of claim 1, wherein the captured events include videoconference events selected from the group consisting of videoconference activation, videoconference cancellation, participant arrival, participant departure, and slide presentation changes.

6. The system of claim 1, wherein the indices are associated with a beginning time point of the captured event.

7. The system of claim 1, wherein the media playback unit includes a media player module and a media controller module, the media player module configured to render the stored videoconference data on a display screen, the media controller capable of indicating a segment of the video stream to be delivered to the media player module from the media management server.

8. A videoconferencing system, comprising:
a server component including a media server configured to store both video/audio data and events associated with a videoconference session, the media server capable of analyzing the stored video/audio data to insert markers into the stored video/audio data, the markers identifying the events;
a client component including a client in communication with a client monitor, the client component including a media playback unit configured to establish a connection with the media server, the media playback unit further configured to enable position control of a video stream defined from the stored video/audio data delivered to the media playback unit from the media server while maintaining the connection; and
a first and second path defined between the client component and the server component, the first path enabling real time video/audio data to be exchanged between the client component and a conferencing endpoint of the server component during a videoconference, the second path defined between the client component and the server component enabling system information to be exchanged between the client monitor and the server component.

9. The system of claim 8, wherein the media playback unit includes a media player module and a media controller module, the media player module configured to render the stored video/audio data on a display screen, the media controller capable of indicating a segment of the video stream to be delivered to the media player module from the media server.

10. The system of claim 8, wherein the markers are associated with a starting point of the events.

11. The system of claim 8, wherein the stored events include videoconference events selected from the group consisting of videoconference activation, videoconference cancellation, participant arrival, participant departure, and slide presentation changes.

12. The system of claim 9, wherein the media controller module is configured to enable a user to specify the segment of the video stream, the specification of the segment of the video stream causing a controller event which results in the segment of the video stream being delivered to the player application while maintaining the connection.

13. The system of claim 8, wherein the first path is a conference channel and the second path is a back-channel.

14. A graphical user interface (GUI) for playback of videoconference data rendered on a display screen, comprising:
a first region defining an integrated audio/video component corresponding to a time position of a video stream associated with the videoconference data, the integrated audio/video component associated with a media server;
a second region providing a document file corresponding to the time position of the video stream;
a third region providing a media presentation corresponding to the time position of the video stream; and
a fourth region providing a list of content items associated with the video stream, wherein a selection of one of the content items triggers the first, second and third region to present respective videoconference data corresponding to a time position associated with the one of the content items.

15. The GUI of claim 14, wherein the list of content items are associated with a configuration of the videoconference data selected from the group consisting of thumbnails, slide titles, file names and time positions corresponding to the videoconference data.

16. The GUI of claim 14, wherein the time position corresponds to an index associated with a segment of the video stream.

17. A method for presenting stored videoconference data, comprising:
converting media formats associated with a videoconference presentation to a common format videoconference data;
storing the common format videoconference data;
identifying events associated with the stored videoconference data;
inserting markers representing the events into the stored videoconference data; and
presenting segments of the stored videoconference data corresponding to the markers.

18. The method of claim 17, wherein the markers correspond to starting time positions of the events.

19. The method of claim 17, wherein the method operation of presenting segments of the stored videoconference data corresponding to the markers includes,
maintaining a same connection for each of the segments being presented.

20. The method of claim 17, wherein the method operation of presenting segments of the stored videoconference data corresponding to the markers includes,
advancing from a location associated with a first segment of the stored video content being presented to a starting position of a second segment while maintaining a connection for both the first segment and second segment.

21. The method of claim 17, further comprising:
selecting segments of the stored videoconference data for presentation.

22. A computer readable medium having program instructions for presenting stored videoconference data, comprising:
program instructions for converting media formats associated with a videoconference presentation to a common format videoconference data;
program instructions for storing the common format videoconference data;
program instructions for identifying events associated with the stored videoconference data;
program instructions for inserting markers representing the events into the stored videoconference data; and
program instructions for presenting segments of the stored videoconference data corresponding to the markers.

23. The computer readable medium of claim 22, wherein the markers correspond to starting time positions of the events.

24. The computer readable medium of claim 22, wherein the program instructions for presenting segments of the stored videoconference data corresponding to the markers includes,
program instructions for maintaining a same connection for each of the segments being presented.

25. The computer readable medium of claim 22, wherein the program instructions for presenting segments of the stored videoconference data corresponding to the markers includes,
program instructions for advancing from a location associated with a first segment of the stored video content being presented to a starting position of a second segment while maintaining a connection for both the first segment and second segment.

26. The computer readable medium of claim 22, further comprising:
program instructions for selecting segments of the stored videoconference data for presentation.
